# EUROPÄISCHE PATENTSCHRIFT

(11) **EP 0 870 557 B1**
(45) Veröffentlichungstag und Bekanntmachung des Hinweises auf die Patenterteilung: **20.12.2000**
(21) Anmeldenummer: 98105390.3
(22) Anmeldetag: 25.03.1998
(51) Int. Cl.: B21D 39/04, B21D 26/02

(54) **Verfahren und Vorrichtung zum Einbringen von Verbindungselementen in eine Wand**
Method and apparatus for inserting fasteners in a wall
Méthode et dispositif pour introduire des éléments de fixation dans une paroi

(30) Priorität: 10.04.1997 DE 19714902
(43) Veröffentlichungstag der Anmeldung: 14.10.1998
(73) Patentinhaber: Dr. Meleghy Hydroforming GmbH & Co. KG, 08056 Zwickau (DE)
(72) Erfinder: Schulze, Bernd, Dr.-Ing., 09366 Niederdorf (DE)
(74) Vertreter: Rumrich, Gabriele

(56) Entgegenhaltungen:
- EP-A- 0 593 950
- EP-A- 0 686 458
- DE-A- 19 508 632

## Beschreibung

Die Erfindung bezieht sich auf ein Verfahren und eine Vorrichtung zum Einbringen von Verbindungselementen in eine Wand wie sie, beispielsweise aus der DE-A-195 08632 bekannt sind (Nächstkommender Stand der Technik). Im Karosserie-, Behälter- und Armaturenbau besteht die Notwendigkeit, als Hohlkörper und Blechformteile ausgebildete Baurteile mit Verbindungselementen zu versehen. Dies geschieht traditionell durch das Anschweißen von Muttern oder das Einschrauben von Karosserieschrauben. Dafür sind Schweiß-, Schraub- und Handhabungsvorrichtungen und eine Vielzahl von Arbeitsgängen erforderlich. Es ist deshalb vorgeschlagen worden, die Arbeitsgänge des Umformens der Bauteile und des Einbringens der Verbindungselemente zusammenzuführen. Bei einem in der DE 195 08 632 A1 beschriebenen Verfahren wird während des Innenhochdruckumformens eines Bleches gleichzeitig ein Verbindungselement eingeformt, indem sich das Blech unter dem Einfluß des Innenhochdrucks nicht nur an die Gravur an-, sondern auch um das Verbindungselement herumlegt. Sofern man nicht auf hohe Positioniergenauigkeiten und das gleichzeitige Einformen mehrerer Verbindungselemente verzichten will, erfordert dieses Verfahren neben guten Kenntnissen des Fließverhaltens eine aufwendige Ablaufsteuerung. Ein weiteres bekanntes Verfahren gemäß der EP 0 593 950 A1 umfaßt das Formen eines von einem Kragen umgebenen Loches, das Einpressen eines rohrförmigen Einsatzes in den Kragen und das Einleiten einer Flüssigkeit in die rohrförmige Struktur, um den Kragen gegen den rohrförmigen Einsatz zu drücken. Das Verfahren bezieht sich, da der zum Formen des Loches erforderliche Stempel durch den Verstärkungseinsatz hindurchgeführt werden muß, ausschließlich auf das Einbringen rohrförmiger Verstärkungseinsätze in rohrförmige Strukturen. Andere Bauteilstrukturen und andere Verbindungselemente sind ausgeschlossen. Verbindungen müssen daher immer auf diese rohrförmigen Einsätze zurückgeführt werden. In Fällen, in denen dies möglich ist, vermindern die zusätzlichen Kopplungen die Belastbarkeit und die Zuverlässigkeit der Verbindungen. In anderen Fällen ist man weiterhin auf aufwendige traditionelle Verfahren verwiesen.

Der Erfindung liegt die Aufgabe zugrunde, ein Verfahren und eine Vorrichtung zum Einbringen von Verbindungselementen in eine Wand zu schaffen, die bei geringem Aufwand eine größere Verbindungsvielfalt und Verbindungsbelastbarkeit ermöglichen.

Erfindungsgemäß wird diese Aufgabe durch die Merkmale der Ansprüche 1 und 12 gelöst, deren Unteransprüche die Erfindung weiter ausbilden.

Die Verbindungselemente weisen die zum Durchdringen der Wand erforderlichen Stempel auf und können daher von beliebiger Art und Form sein. Für das Einbringenkönnen ist es jetzt unerheblich, ob sie als Gewindebolzen, Laschen, Flansche, Ösen oder dgl. ausgebildet sind, nicht aber für das Gestalten von Verbindungen. Deren Belastbarkeit läßt sich nun durch die Art und Form der Verbindungselemente sowie durch die Ausbildung und die Anzahl der stempelförmigen Abschnitte beeinflussen. Der entgegenwirkende Innenhochdruck ermöglicht ein schubenergiearmes und gezieltes Durchdringen der Wand und den Einsatz geringerfester Materialien für die Verbindungselemente. Geschieht das Einbringen der Verbindungselemente bei Beibehaltung der Lage des Bauteils gleichzeitig mit oder unmittelbar nach dem Innenhochdruck-Umformen, lassen sich unter Einsparung von Handhabungs- und Vorrichtungsaufwand hohe Positoniergenauigkeiten erzielen. Die Verbindungselemente werden im gesteuerten Zusammenwirken mit dem Innenhochdruck langsam eingedrückt oder eingeschossen. Das Aufwerfen einer Wulst schafft Material zum Festhalten. Einschnürungen, Hinterschneidungen, Reib- und strukturierte Flächen nehmen das Material effektiv auf. Die Strukturierung kann von rauh bis zerklüftet, von schuppig bis gerillt reichen. Konische und scharfe Bereiche fördern das Durchdringen und verbessern den Sitz. Pfeil- oder herzförmig ausgebildete stempelförmige Abschnitte vereinen Konizität, Hinterschneidung und Schärfe.

Die erfindungsgemäße Vorrichtung verwendet ein Innenhochdruck-Umformwerkzeug. Es weist zusätzliche Mittel zum Zuführen und zum Beaufschlagen der Verbindungselemente mit der Schubkraft auf.

Die Erfindung wird nachstehend anhand eines Ausführungsbeispiels näher erläutert. In den zugehörigen Zeichnungen, in denen gleichwirkende Bauteile mit gleichen Bezugszeichen versehen sind, zeigen:
- Fig. 1: eine schematische Darstellung der erfindungsgemäßen Vorrichtung mit zugeführtem Verbindungselement
- Fig. 2: einen Ausschnitt aus der Vorrichtung gemäß Fig. 1 mit eingebrachtem Verbindungselement
- Fig. 3: einen Ausschnitt aus einer weiteren Vorrichtung mit zugeführtem Verbindungselement
- Fig. 4: den Ausschnitt gemäß Fig. 3 mit eingebrachtem Verbindungselement
- Fig. 5: einen Ausschnitt aus einer dritten Vorrichtung

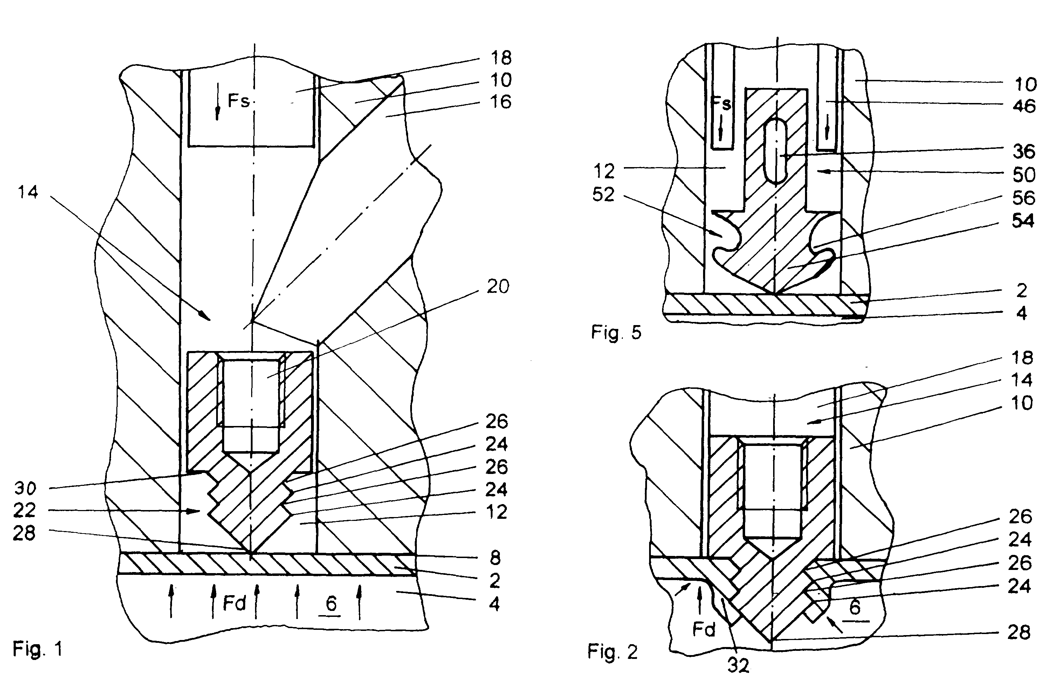

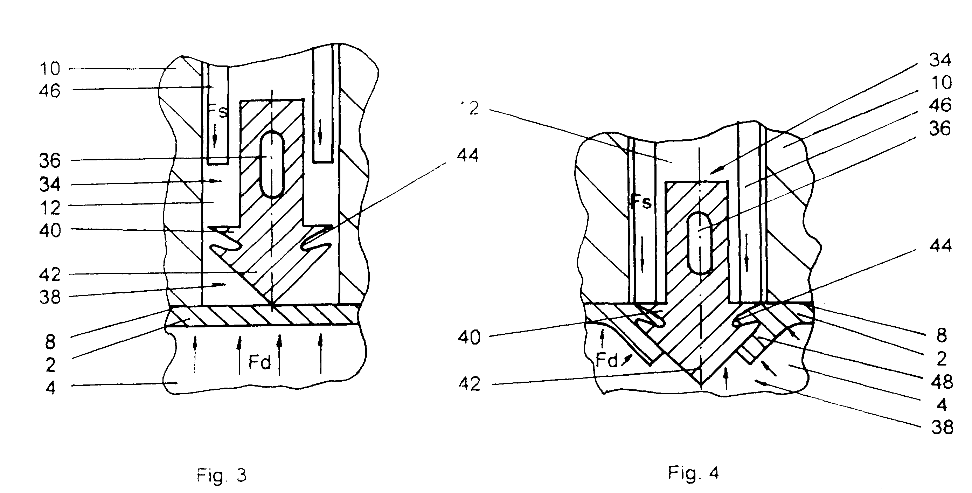

Innenhochdruck-Umformwerkzeuge besitzen Mittel zum Aufnehmen eines Werkstücks sowie zum Bilden einer Gravur und eines Druckraums, aus dem heraus das Werkstück unter dem Einfluß eines Druckmediums gegen die Gravur gedrückt werden kann. Hohlprofile werden zwischen zwei Werkzeughälften aufgenommen, die eine Gravur bilden und zwischen sich in Achsrichtung zwei Druckstößel führen, durch die hindurch das Hohlprofil mit Druckmedium beaufschlagt wird. Flache Strukturen sind zwischen zwei Werkzeughälften eingespannt, deren eine eine Gravur und deren andere einen Druckraum bildet. In diesem Sinne zeigt Fig. 1 ein Blech 2, das durch ein im Druckraum 4 befindliches Druckmedium 6 mit der Druckkraft Fd gegen die Gravur 8 der Werkzeughälfte 10 gedrückt wird. Das Druckmedium, z. B. Wasser oder Gas, wird durch eine nicht gezeigte Druckquelle bereitgestellt. Auf dem Blech 2 steht in einem senkrechten Kanal 12 ein Verbindungselement 14 , welches über den geneigten Zuführkanal 16 mittels Luftdruck zugeführt worden ist. Auch die den Zuführkanal 16 speisende Luftdruckquelle ist nicht dargestellt. Über dem Verbindungselement 14 ist im Kanal 12 ein Stempel 18 geführt, der auf nicht gezeigte Weise die Schubkraft Fs entwickelt. Das Verbindungselement 14 ist axialsymmetrisch aufgebaut und besitzt an seiner Oberseite eine senkrechte Gewindebohrung 20 für eine Schraubverbindung und an seiner Unterseite einen stempelförmigen Abschnitt 22 mit umlaufenden scharfkantigen Vorsprüngen 24 und Rillen 26 und einer nach unten weisenden Spitze 28. Sein Bund 30 bildet die Trennebene zum schlankeren stempelförmigen Abschnitt 22.

Die Wirkungsweise ist folgende:
Um das Verbindungselement 14 in das Blech 2, das hier beispielsweise einem Abschnitt eines unter Innenhochdruck stehenden rohrförmigen Hohlkörpers entspricht, einzubringen, wird zunächst der Stempel 18 mit der Schubkraft Fs nach unten gefahren. Die Spitze 28 des mit der Schubkraft Fs belasteten Verbindungselements 14 durchstößt dann das Blech 2 und wirft eine Wulst 32 auf, die sich jedoch aufgrund des Gegendrucks des Druckmediums 6 nicht von dem stempelförmigen Abschnitt 22 löst, sondern sich an diesen anlegt. Zunächst legt sich die Wulst 32 an den Kegelmantel der Spitze 28 an. Beim weiteren Vordringen des stempelförmigen Abschnitts 22 wird ein innenliegender erster Bereich der Wulst 32 vom ersten Vorsprung 24 aufgerauht, anschließend vom Druckmedium 6 in die erste Rille 26 gedrückt, daraufhin durch den nachdrängenden zweiten Vorsprung 24 erneut aufgerauht und schließlich vom Druckmedium 6 in die zweite Rille 26 gedrückt, währenddessen ein außenliegender zweiter Bereich der Wulst 32 vom ersten Vorsprung 24 aufgerauht und abschließend in die erste Rille 26 gedrückt wird. Durch dieses intensive Aufeinandereinwirken des stempelförmigen Abschnittes 22 und des als Wulst 32 aufgeworfenen Bleches 2 entsteht zwischen beiden eine innige Verbindung, die nach dem Zurückführen des Stempels 18 und dem Drucklosschalten des Druckraums 4 hochbelastbar ist. Eine solche innige Verbindung ist selbstverständlich auch durch andere Strukturierungen des stempelförmigen Abschnitts erzielbar.

Gemäß einem in den Fig. 3 und 4 dargestellten weiteren Ausführungsbeispiel weist ein ansonsten ebenfalls axialsymmetrisch aufgebautes Verbindungselement 34 statt einer Gewindebohrung ein sich in einem schlanken Schaft erstreckendes Langloch 36 auf. An den schlanken Schaft schließt sich nach unten ein breiterer stempelförmiger Abschnitt 38 an, der in einen sich nach unten verjüngenden flachen Bereich 40 und einen sich daran anschließenden pfeilförmigen Bereich 42 unterteilt ist, wobei beide Bereiche durch die Hinterschneidung 44 voneinander getrennt sind. Über dem auf dem Blech 2 stehenden Verbindungselement 34 ist ein die Schubkraft Fs entwickelnder ringförmiger Stempel 46 geführt.

Die Wirkungsweise ist folgende:
Um das Verbindungselement 34 in das Blech 2, das hier beispielsweise einem Abschnitt eines unter Innenhochdruck stehenden Blechformteiles entspricht, einzubringen, wird zunächst wiederum der Stempel 46 mit der Schubkraft Fs nach unten gefahren, so daß die Pfeilspitze das Blech 2 durchstößt und eine Wulst 48 aufwirft. Diese legt sich zunächst an den Mantel des pfeilförmigen Bereichs 42 an. Sobald der vordringende stempelförmige Abschnitt 38 jedoch die Hinterschneidung 44 freigibt, beginnt sich die aufgeworfene Wulst 48 auch dahinein auszubreiten bis schließlich abwechselnd Materialschichten des stempelförmigen Abschnittes und der Wulst gegeneinander verpreßt sind. Eine ähnlich innige Verbindung ergibt sich auch bei Verwendung eines in Fig. 5 gezeigten Verbindungselements 50, dessen stempelförmiger Abschnitt 52 statt eines pfeilförmigen Bereiches einen im Längsschnitt herzförmigen Bereich 54 aufweist, der sich an die Hinterschneidung 56 anschließt.

Weitere Belastbarkeitssteigerungen sind möglich, wenn ein und dasselbe Verbindungselement mit mehreren stempelförmigen Abschnitten versehen wird. Dies bietet sich an, wenn das Verbindungselement beispielsweise eine Lasche oder ein Flansch ist. Ebenso können die stempelförmigen Abschnitte über die verschiedensten feineren oder groberen Strukturierungen hinaus Reibflächen aufweisen. Die Ausbildung der Wulst, sofern eine solche gewünscht ist, läßt sich verfahrenstechnisch durch den Aufbau der Schub- und Druckkraft und gestalterisch durch die stempelförmigen Abschnitte beeinflussen, wobei diese auch speziell verteilte scharfe Bereiche besitzen können. Die Verbindungselemente werden vorzugsweise während des Innenhochdruckumformens des Bauteils oder unmittelbar danach eingebracht, da dies nicht nur ökonomisch ist, sondern bei Beibehaltung der Lagefixierung auch hohe Positioniergenauigkeiten ermöglicht. Sie lassen sich aber auch unabhängig von begleitenden, vorausgehenden oder nachfolgenden Innenhochdruck-Umformvorgängen einbringen. Eine Übernahme des bestückten Bauteils in andere Innenhochdruck-Umformwerkzeuge ist möglich, da die stempelförmigen Abschnitte in der Wand verbleiben und keine Öffnungen hinterlassen.

## Patentansprüche

1. Verfahren zum Einbringen von Verbindungselementen (14, 34, 50), die jeweils wenigstens einen stempelförmigen Abschnitt (22, 38, 52) aufweisen, in eine unter Innenhochdruck stehende Wand (2), **dadurch gekennzeichnet**, daß der stempelförmige Abschnitt (22, 38, 52) unter dem Einfluß einer Schubkraft (Fs), die der Druckkraft (Fd) des Innenhochdrucks entgegenwirkt, die Wand unter Bildung einer Wulst (32) durchdringt, die sich unter dem Einfluß des Innenhochdrucks an den stempelförmigen Abschnitt anlegt und diesen festhält.

2. Verfahren anch Anspruch 1, dadurch gekennzeichnet, daß die Verbindungselemente (14, 34, 50) gleichzeitig mit oder unmittelbar nach dem Innenhochdruck-Umformen der Wand (2) eingebracht werden.

3. Verfahren nach Anspruch 1 oder 2, dadurch gekennzeichnet, daß die Verbindungselemente (14, 34, 50) im gesteuerten Zusammenwirken mit dem Innenhochdruck eingedrückt oder eingeschossen werden.

4. Verfahren nach einem der Ansprüche von 1 bis 3, dadurch gekennzeichnet, daß der stempelförmige Abschnitt (22, 38, 52) zumindest teilweise konisch ausgebildet ist.

5. Verfahren nach einem der Ansprüche von 1 bis 4, dadurch gekennzeichnet, daß der stempelförmige Abschnitt (22 bzw. 38, 52) wenigstens eine koaxiale Einschnürung (26) und/oder Hinterschneidung (44, 56) aufweist.

6. Verfahren nach einem der Ansprüche von 1 bis 5, dadurch gekennzeichnet, daß der stempelförmige Abschnitt (22) scharfe Bereiche (24, 28) aufweist.

7. Verfahren nach einem der Ansprüche von 1 bis 6, dadurch gekennzeichnet, daß der stempelförmige Abschnitt (52 bzw. 38) im Längsschnitt herz- oder pfeilförmig ausgebildet ist.

8. Verfahren nach einem der Ansprüche von 1 bis 7, dadurch gekennzeichnet, daß der Mantel des stempelförmigen Abschnitts (22, 38, 52) als Reibfläche ausgebildet und/oder strukturiert ist.

9. Verfahren nach einem der Ansprüche von 1 bis 8, dadurch gekennzeichnet, daß sich der stempelförmige Abschnitt (22) an einen Bund (30) anschließt, der sich wegbegrenzend an die Wand (2) anlegt.

10. Verfahren nach einem der Ansprüche von 1 bis 9, dadurch gekennzeichnet, daß die Verbindungselemente jeweils ein oder mehrere stempelförmige Abschnitte aufweisen.

11. Verfahren nach einem der Ansprüche von 1 bis 10, dadurch gekennzeichnet, daß die Verbindundelemente (14, 34, 50) von beliebiger Art und Form sind.

12. Innenhochdruck-Umformwerkzeug mit einer Vorrichtung zum Einbringen von Verbindungselementen (14, 34, 50), die jeweils wenigstens einen Stempelförmigen Abschnitt aufweisen, in die Wand (2) eines Werkstückes, zur Durchführung des Verfahrens nach einem der Ansprüche von 1 bis 11, dadurch gekennzeichnet, daß das Innenhochdruck-Umformwerkzeug (10) zusätzlich aufweist
- erste Mittel (12, 16) zum Zuführen der Verbindungselemente (14, 34, 50) an die Wand (2) und
- zweite Mittel (18, 46) zum unmittelbaren oder mittelbaren Beaufschlagen der an den Verbindungselementen (14, 34, 50) angeordneten stempelförmigen Abschnitte (22, 38, 52) mit einer Schubkraft (Fs), die der Druckkraft (Fd) des gleichzeitig wirkenden Innenhochdrucks entgegenwirkt.

13. Innenhochdruck-Umformwerkzeug nach Anspruch 12, dadurch gekennzeichnet, daß die ersten Mittel ein oder mehrere unter Druck setzbare Zuführungskanäle (12, 16) sind.

14. Innenhochdruck-Umformwerkzeug nach Anspruch 12 oder 13, dadurch gekennzeichnet, daß die zweiten Mittel ein kraftbetätigbarer Stempel (18, 46) oder ein unter Druck setzbares Medium sind.

## Claims

1. Method for introducing fasteners (14, 34, 50), which each exhibit at least one punch-shaped portion (22, 38, 52), into a wall (2) standing under a high internal pressure, characterised in that under the influence of a thrust (Fs) which counteracts the force (Fd) of the high internal pressure, the punch-shaped portion (22, 38, 52) penetrates through the wall, forming a bead (32) which, under the influence of the high internal pressure bears against the punch-shaped portion and holds it.

2. Method according to claim 1, characterised in that the fasteners (14, 34, 50) are introduced simultaneously with or immediately after the forming of the wall (2) under the high internal pressure.

3. Method according to claim 1 or 2, characterised in that the fasteners (14, 34, 50) are pressed in or shot in in controlled interaction with the high internal pressure.

4. Method according to one of claims 1 to 3, characterised in that the punch-shaped portion (22, 38, 52) is at least partly conical in form.

5. Method according to one of claims 1 to 4, characterised in that the punch-shaped portion (22 or 38, 52) exhibits at least one coaxial neck (26) and/or undercut (44, 56).

6. Method according to one of claims 1 to 5, characterised in that the punch-shaped portion (22) exhibits sharp regions (24, 28).

7. Method according to one of claims 1 to 6, characterised in that the punch-shaped portion (52 or 38) is heart-shaped or arrow-shaped in longitudinal section.

8. Method according to one of claims 1 to 7, characterised in that the outer surface of the punch-shaped portion (22, 38, 52) is embodied as a friction surface and/or structured.

9. Method according to one of claims 1 to 8, characterised in that the punch-shaped portion (22) adjoins a collar (30) which bears on the wall (2) limiting motion.

10. Method according to one of claims 1 to 9, characterised in that the fasteners in each case exhibit one or more punch-shaped portions.

11. Method according to one of claims 1 to 10, characterised in that the fasteners (14, 34, 50) are of any type and form.

12. Tool for forming under high internal pressure with a device for introducing fasteners (14, 34, 50) which in each case exhibit at least one punch-shaped portion, into the wall (2) of a workpiece, for implementing the method according to one of claims 1 to 11, characterised in that the tool (10) for forming under high internal pressure additionally exhibits
- first means (12, 16) for feeding the fasteners (14, 34, 50) to the wall (2) and
- second means (18, 46) for directly or indirectly applying a thrust (Fs) counteracting the force (Fd) of the simultaneously acting high internal pressure, to the punch-shaped portions (22, 38, 52) disposed on the fasteners (14, 34, 50).

13. Tool for forming under high internal pressure according to claim 12, characterised in that the first means are one or more feeding channels (12, 16) which can be placed under pressure.

14. Tool for forming under high internal pressure according to claim 12 or 13, characterised in that the second means are a punch (18, 46) which can be operated by force or a medium which can be placed under pressure.

## Revendications

1. Procédé pour introduire des éléments de liaison (14, 34, 50), ayant chacun au moins un segment en forme de poinçon (22, 38, 52) dans une paroi (2) soumise à une pression interne,
caractérisé en ce que
le segment en forme de poinçon (22, 38, 52) traverse la paroi en formant un bourrelet (32), sous l'influence d'une force de poussée (Fs) qui s'oppose à la force (Fd) développée par la pression interne, et sous l'influence de la pression interne le bourrelet s'applique contre le segment en forme de poinçon et bloque celui-ci.

2. Procédé selon la revendication 1,
caractérisé en ce que
les éléments de liaison (14, 34, 50) sont introduits en même temps ou directement après la déformation de la paroi (2) par la pression interne.

3. Procédé selon la revendication 1 ou 2,
caractérisé en ce que
les éléments de liaison (14, 34, 50) sont enfoncés ou tirés en coopérant de manière commandée avec la pression interne.

4. Procédé selon l'une quelconque des revendications 1 à 3,
caractérisé en ce que
le segment en forme de poinçon (22, 38, 52) est au moins en partie conique.

5. Procédé selon l'une quelconque des revendications 1 à 4,
caractérisé en ce que
le segment en forme de poinçon (22 ou 38, 52) comporte au moins un rétrécissement coaxial (26) et/ou une partie en contre-dépouille (44, 56).

6. Procédé selon l'une quelconque des revendications 1 à 5,
caractérisé en ce que
le segment en forme de poinçon (22) comporte des zones coupantes (24, 28).

7. Procédé selon l'une quelconque des revendications 1 à 6,
caractérisé en ce que
le segment en forme de poinçon (52 ou 38) présente en coupe longitudinale une forme de cardioïde ou de flèche.

8. Procédé selon l'une quelconque des revendications 1 à 7,
caractérisé en ce que
l'enveloppe du segment en forme de poinçon (22, 38, 52) est une surface de friction et/ou est structurée.

9. Procédé selon l'une quelconque des revendications 1 à 8,
caractérisé en ce que
le segment en forme de poinçon (22) est relié à une collerette (30) qui s'appuie contre la paroi (2) en délimitant la course.

10. Procédé selon l'une quelconque des revendications 1 à 9,
caractérisé en ce que
les éléments de liaison comportent chacun un ou plusieurs segments en forme de poinçon.

11. Procédé selon l'une quelconque des revendications 1 à 10,
caractérisé en ce que
les éléments de liaison (14, 34, 50) sont de n'importe quel type et forme.

12. Outil de mise en forme sous pression interne comportant un dispositif pour introduire des éléments de liaison (14, 34, 50) ayant chacun au moins un segment en forme de poinçon, dans la paroi (2) d'une pièce, pour la mise en oeuvre du procédé selon l'une des revendications 1 à 11,
caractérisé en ce que
l'outil de mise en forme sous pression interne (10) comporte en outre
• des premiers moyens (12, 16) pour appliquer les éléments de liaison (14, 34, 50) contre la paroi (2),
• des seconds moyens (18, 46) pour appliquer directement ou indirectement aux segments en forme de poinçons (22, 38, 52) prévus sur les éléments de liaison (14, 34, 50), une poussée (Fs) qui s'oppose à la force (Fd) engendrée par la pression interne, agissant en même temps.

13. Outil de mise en forme sous pression interne selon la revendication 12,
caractérisé en ce que
les premiers moyens sont constitués par un ou plusieurs canaux d'alimentation (12, 16) susceptibles d'être mis en pression.

14. Outil de mise en forme sous pression interne selon la revendication 12 ou 13,
caractérisé en ce que
les seconds moyens sont constitués par un poinçon (18, 46) actionné par la force ou par un fluide mis en pression.
